# EUROPEAN PATENT APPLICATION

(11) **EP 4 083 928 A1**
(43) Date of publication of application: **02.11.2022**
(21) Application number: 20907749.4
(22) Date of filing: 04.12.2020
(51) Int. Cl.: G06T 19/00, G06Q 50/10

(54) **INFORMATION PROVIDING DEVICE, INFORMATION PROVIDING SYSTEM, INFORMATION PROVIDING METHOD, AND INFORMATION PROVIDING PROGRAM**

(30) Priority: 24.12.2019 JP 2019233398
(71) Applicant: Vega Corporation Co., Ltd., Fukuoka-shi, Fukuoka 812-0038 (JP)
(72) Inventor: UKISHIRO, Tomokazu, Fukuoka-shi, Fukuoka 812-0038 (JP); MIYASUE, Keigo, Fukuoka-shi, Fukuoka 812-0038 (JP); MORITAKE, Nobuo, Fukuoka-shi, Fukuoka 812-0038 (JP)
(74) Representative: AWA Sweden AB
(86) International application number: PCT/JP2020/045342
(87) International publication number: WO 2021/131623

(57) **Abstract**

An information providing apparatus 100 of an information providing system 1 includes, as functions thereof: an attribute information acquisition unit 131 that receives user attribute information; an image information reception unit 132 that receives image information captured by photographing or filming a user's room; a preference information acquisition unit 133 that receives preference information indicating a user's preference for the room; a layout information generation unit 134 that generates layout information for the user's room; a furniture arrangement unit 135 that selects furniture information pertaining to furniture suitable for the user based on the attribute information, the layout information, or the preference information, and arranges the selected furniture information in the image information for the room; and an image information presentation unit 136 that presents the user with the image information in which the furniture is arranged.

## Description

### FIELD

The present disclosure relates to an information providing apparatus, an information providing system, an information providing method, and an information providing program that present a state in which candidate furniture for purchase is arranged in image information or video information captured by photographing or filming a room.

### BACKGROUND

In recent years, mail order sales, in which products are sold via media such as the Internet, have become popular. Mail order sales are useful particularly for large or heavy merchandise that requires time and effort to be carried into a home after purchase at a store, because it is possible to have the merchandise carried into the home by a dedicated delivery company.

An example of such large merchandise is furniture. A number of vendors use mail order sales for furniture as well. In particular, vendors who sell furniture via the Internet post image information such as pictures of the furniture on the Internet to compensate for a weakness of mail order sales, the inability to see and purchase an actual piece of merchandise.

However, since furniture is to be placed and used in a residence, it is important that it is compatible in function and design with the residence in which it is currently residing or will reside, as well as with other furniture. For this reason, a prospective buyer who sees the image information of the furniture itself does not receive a clear image, and it has often been difficult to make a decision on a purchase. Therefore, in mail order sales of furniture, it is important to be able to provide an image of how the furniture will look when it is actually placed in a residence.

Patent Literature 1 discloses an interior view image creation apparatus that creates an image of an interior space of a building from a three-dimensional model of the building. The interior view image creation apparatus described in Patent Literature 1 is configured to create an interior view image of a space from a predetermined viewpoint on the basis of a planar shape of the space, openings in the space, fittings, fixtures or furniture arranged in the space.

### CITATION LIST

### PATENT LITERATURE

### [Patent Literature 1]

Jpn. Pat. Appln. KOKAI Publication No. 2017-174310

### SUMMARY

### TECHNICAL PROBLEM

However, since the interior view image creation apparatus described in Patent Literature 1 does not display image information for furniture actually on sale via mail order in the interior view image, it is not possible to create an image of the combination of the furniture with the residence you are currently living in or are planning to live in.

Accordingly, the present disclosure describes an information providing apparatus, an information providing system, an information providing method, and an information providing program that are capable of presenting a state in which candidate furniture for purchase is arranged on image information or video information captured by photographing or filming a room.

### SOLUTION TO PROBLEM

An information providing apparatus in one aspect of the present disclosure includes: a user information acquisition unit that acquires information on a user; an image information reception unit that receives an input of image information or video information captured by photographing or filming a room; a layout information generation unit that conducts an analysis based on the image information or the video information to generate layout information for the room; a furniture arrangement unit that selects, from furniture information stored in advance, furniture information suitable for the user based on the user information and the layout information, and arranges furniture pertaining to the selected furniture information so as to be superimposed on the image information or the video information; and an image information presentation unit that presents the image information or the video information in which the furniture is arranged to the user.

An information providing system in one aspect of the present disclosure is an information providing system that includes an information providing apparatus and a user terminal, the information providing apparatus including: a user information acquisition unit that acquires information on a user; an image information reception unit that receives an input of image information or video information captured by photographing or filming a room; a layout information generation unit that conducts an analysis based on the image information or the video information to generate layout information for the room; a furniture arrangement unit that selects, from furniture information stored in advance, furniture information suitable for the user based on the user information and the layout information, and arranges furniture pertaining to the selected furniture information so as to be superimposed on the image information or the video information; and an image information presentation unit that transmits the image information or the video information in which the furniture is arranged to the user terminal, and the user terminal including: an image information transmission unit that transmits the image information or video information captured by the user photographing or filming the room to the information providing apparatus; and an image information display unit that displays, for the user, the image information or the video information in which the furniture is arranged and which is received from the information providing apparatus.

An information providing method in one aspect of the present disclosure includes: a user information acquisition step of a user information acquisition unit acquiring information on a user; an image information reception step of an image information reception unit receiving an input of image information or video information captured by photographing or filming a room; a layout information generation step of a layout information generation unit conducting an analysis based on the image information or the video information to generate layout information for the room; a furniture arrangement step of a furniture arrangement unit selecting, from furniture information stored in advance, furniture information suitable for the user based on the user information and the layout information and arranging furniture pertaining to the selected furniture information so as to be superimposed on the image information or the video information; and an image information presentation step of an image information presentation unit presenting the image information or the video information in which the furniture is arranged to the user.

An information providing program in one aspect of the present disclosure causes an electronic computer to execute: a user information acquisition step of acquiring information on a user; an image information reception step of receiving an input of image information or video information captured by photographing or filming a room; a layout information generation step of conducting an analysis based on the image information or the video information to generate layout information for the room; a furniture arrangement step of selecting, from furniture information stored in advance, furniture information suitable for the user based on the user information and the layout information and arranging furniture pertaining to the selected furniture information so as to be superimposed on the image information or the video information; and an image information presentation step of presenting the image information or the video information in which the furniture is arranged to the user.

### ADVANTAGEOUS EFFECT OF INVENTION

According to the present disclosure, image information or video information captured by photographing or filming a user's room is received, the image information or the video information is analyzed to generate layout information, furniture information suitable for the user is selected, and the furniture is arranged in the image information or the video information and then presented to the user. Accordingly, it is possible to present the state in which furniture pertaining to the furniture information is arranged in the layout information of an actual residence received from the user. It is thus possible for the user to visually grasp an image of a candidate furniture for purchase arranged in the actual user's own residence through the three-dimensional space.

### BRIEF DESCRIPTION OF THE DRAWINGS

FIG. 1 is a functional configuration block diagram showing an information providing system 1 according to an embodiment of the present disclosure.
FIG. 2 is a functional configuration block diagram showing a user terminal 200 shown in FIG. 1.
FIG. 3 is a flowchart showing an operation of the information providing system 1 shown in FIG. 1.
FIG. 4 is a schematic diagram showing an example image information for a room to be displayed on the display unit 220 shown in FIG. 2.
FIG. 5 is a schematic diagram showing example image information R received by the image information reception unit 132 shown in FIG. 1.
FIG. 6 is a schematic diagram showing an example of inputting preference information to be displayed on the display unit 220 shown in FIG. 2.
FIG. 7 is a schematic diagram showing example data held in the furniture DB 123 shown in FIG. 1.
FIG. 8 is a schematic diagram showing an example display of image information displayed on the display unit 220 shown in FIG. 2.
FIG. 9 is a schematic diagram showing an example presentation of furniture information displayed on the display unit 220 shown in FIG. 2.
FIG. 10 is a functional configuration block diagram showing an information providing system 1A according to an embodiment of the present disclosure.
FIG. 11 is a functional configuration block diagram showing an information providing system 1B according to an embodiment of the present disclosure.
FIG. 12 is a functional configuration block diagram showing a computer 700 according to an embodiment of the present disclosure.

### DETAILED DESCRIPTION

Hereinafter, embodiments of the present disclosure will be described in detail with reference to the drawings. Note that the embodiments described below do not unduly limit the present disclosure as recited in the claims. Also, not all of the components shown in the embodiments may be essential components for the present disclosure.

### <Configuration>

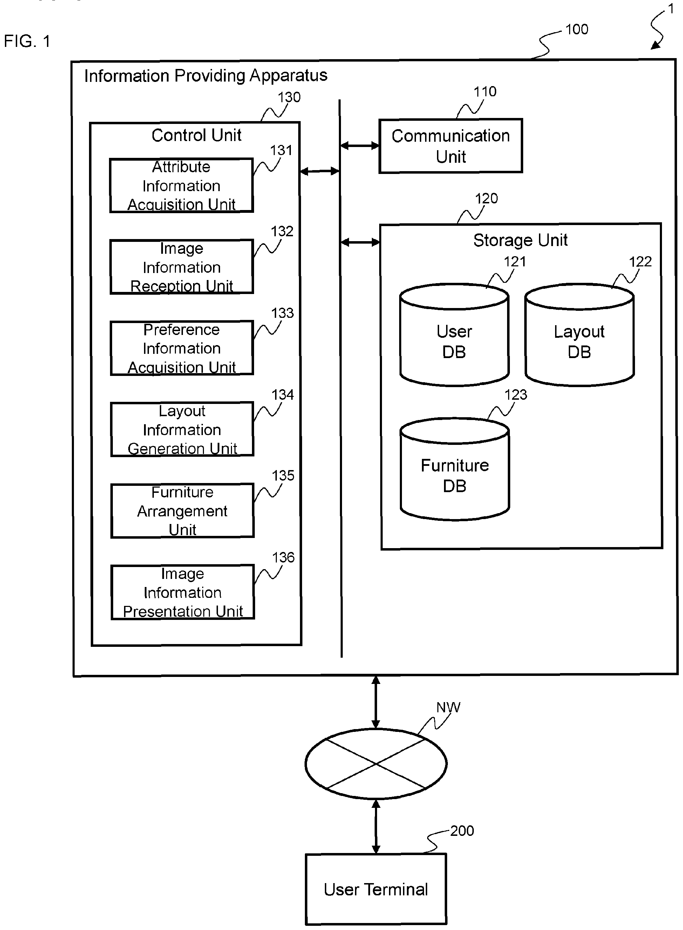

FIG. 1 is a configuration block diagram showing an information providing system 1 according to an embodiment of the present disclosure. The information providing system 1 is, but is not limited to, for example a system operated by a vendor who sells furniture which provides information on furniture that is merchandise and which presents furniture for sale that is arranged in image information or video information captured by photographing or filming a room of a user who is a customer of the vendor. Here, the image information or the video information captured by photographing or filming the user's room is a concept including image information based on a still image or video information based on a moving image, and these are collectively referred to as "image information" hereinafter. The presentation of the image information with the furniture arranged by the information providing system 1 is provided through, for example, application of augmented reality (AR) or mixed reality (MR) technology, and the user uses a user terminal to grasp the image information for his/her room having the furniture arranged therein.

The furniture to be arranged in the image information by the information providing system 1 is selected based on user attribute information and preference information. The information providing system 1 thus receives inputs of the user attribute information and the preference information.

The information providing system 1 includes an information providing apparatus 100, a user terminal 200, and a network NW. The information providing apparatus 100 and the user terminal 200 are mutually connected via the network NW. The network NW is a network for communication, and is, but is not limited to, for example a communication network including the Internet, an intranet, a local area network (LAN), a wide area network (WAN), a wireless LAN (WLAN), a wireless WAN (WWAN), a virtual private network (VPN), or the like.

The information providing apparatus 100 receives inputs of the user attribute information, the image information for the room, and the user's preference information from a user, analyzes the image information to generate layout information, selects furniture information suitable for the user on the basis of the user attribute information and the preference information to arrange this furniture in the image information, and then presents the furniture arranged in the image information to the user. The information providing apparatus 100 is, but is not limited to, for example an apparatus including a computer (such as a desktop, a laptop, or a tablet) that provides various web services, a server apparatus, or the like. Note that the server apparatus is not limited to a server apparatus that operates on its own, but may be a distributed server system that operates cooperatively through communication via the network NW, or a cloud server.

The user terminal 200 is a terminal device for the user to input the user attribute information, the image information captured by photographing or filming the room, and the user's preference information to the information providing apparatus 100 and to receive the presentation of the image information in which the furniture is arranged; and the user terminal 200 includes, but is not limited to, for example a smartphone, a portable terminal, a computer (such as a desktop, a laptop, or a tablet), or the like. The user terminal 200 has an application for obtaining a service of the information providing system 1 that is installed or a URL or the like for accessing the information providing apparatus 100 that is set, and the service is started by, for example, tapping or doubleclicking the application or the URL. The user terminal 200 is also provided with a camera function for photographing or filming a user's room.

The information providing apparatus 100 includes, as a functional configuration thereof, a communication unit 110, a storage unit 120, and a control unit 130.

The communication unit 110 is a communication interface for wired or wireless communication with the user terminal 200 via the network NW, and may apply any communication protocol as long as they can mutually communicate. The communication protocol for the communication unit 110 to perform communication is, but is not limited to, for example Transmission Control Protocol/Internet Protocol (TCP/IP).

The storage unit 120 stores a program, input data, or the like for executing various control processes or each function of the control unit 130, and the storage unit 120 includes, but is not limited to, for example a memory such as RAM (Random Access Memory) and ROM (Read Only Memory), or a storage such as an HDD (Hard Disk Drive), SSD (Solid State Drive), and flash memory. The storage unit 120 also stores a user database (DB) 121, a layout DB 122, and a furniture DB 123. Further, the storage unit 120 temporarily stores data when communicating with the user terminal 200 or data generated in each process described below.

The user DB 121 holds identification data for identifying a user who intends to purchase furniture from a vendor operating the information providing system 1, or attribute information such as the age, sex, and place of residence of the user. The identification data of the user is information for logging into the information providing system 1; and the identification data may be issued on the information providing system 1, may be determined based on an input from the user, or may be the user's e-mail address or the like.

The user DB 121 further holds preference information for a user who intends to purchase furniture. The preference information is information on the user's preferences for a living room and furniture of a house. More specifically, the preference information is information on a design, taste, and/or color of the living room and furniture of the house, information indicating a room atmosphere due to these design, taste, and/or color, or information indicating a functionality of the furniture to be used; examples of the information include "Asian", "European", "Japanese", "vintage", "dark", "ivory", "natural", and "low to the ground". The preference information is received by a preference information acquisition unit 133, described below, to hold one or more sets of tag information containing words and phrases such as the aforementioned examples.

The layout DB 122 holds image information captured by photographing or filming a user's room and layout information for the user's room that is generated by analyzing the image information. The layout information more specifically includes information on the presence or absence of a structure in the user's room such as a wall or floor, a ceiling, a door or window, and the presence or absence of a storage space in the user's room, and information on the size of the room such as the dimensions of the interior of the room and those between one structure and another.

The furniture DB 123 holds information on furniture sold by a vendor operating the information providing system 1. The furniture information is more specifically information on a type of the furniture such as "sofa" and "table", or a design, taste, or color of the furniture such as "vintage", "dark", "ivory", and "natural", or information indicating dimensions and a price of the furniture.

The furniture DB 123 also holds image information for the furniture for a furniture arrangement unit 135, as described below, to arrange the furniture in the three-dimensional space. The three-dimensional space is three-dimensional (3D)-modeled information, and the image information for the furniture to arrange in the three-dimensional space is also three-dimensional (3D)-modeled information.

The control unit 130 executes a program stored in the storage unit 120, thereby controlling the overall operation of the information providing apparatus 100 and is, but is not limited to, for example an apparatus including a central processing unit (CPU), a micro-processing unit (MPU), a graphics processing unit (GPU), a microprocessor, a processor core, a multiprocessor, an application-specific integrated circuit (ASIC), and a field-programmable gate array (FPGA). As functions of the control unit 130, the control unit 130 includes an attribute information acquisition unit (user information acquisition unit) 131, an image information reception unit 132, a preference information acquisition unit (user information acquisition unit) 133, a layout information generation unit 134, a furniture arrangement unit 135, and a layout information presentation unit 136. The attribute information acquisition unit 131, the image information reception unit 132, the preference information acquisition unit 133, the layout information generation unit 134, the furniture arrangement unit 135, and the layout information presentation unit 136 are activated by a program stored in the storage unit 120 and executed by the information providing apparatus 100.

The attribute information acquisition unit 131 receives, via the communication unit 110, attribute information for a user accessing the information providing device 100 from the user terminal 200. The user attribute information includes, but is not limited to, information on the age, sex, and place of residence of the user, information on furniture browsed on the information providing apparatus 100, or information on furniture purchased from a vendor operating the information providing system 1. The attribute information is received at the time of inputting information such as the user's address, name, contact information, and means of payment, which is input when the user registers for membership in the information providing system 1 or purchases furniture from the vendor. The received user attribute information is held in the user DB 121. Note that the attribute information acquisition unit 131 may automatically acquire the user attribute information from another web service or the like.

The image information reception unit 132 receives the image information for the user's room from the user terminal 200 via the communication unit 110. The image information for the room is image information based on a still image of the user's room or video information based on a moving image captured by the user terminal 200 through a user's operation. The room referred to here is not limited to a room in which the user actually resides and may be a room which the user is about to move into (e.g., image information or video information captured during a preview of a real estate property).

An example way of capturing the image information for the room by the user will be described below. The user operates the user terminal 200 to photograph or film a wall of the room in one direction. In this state, in accordance with an instruction from the image information reception unit 132, the user terminal 200 is turned to rotate by 90° in the horizontal direction and moved, and photographing or filming is maintained almost in an entire circle in the room to photograph or film the walls of the room in the four directions. Further, in accordance with an instruction from the image information reception unit 132, the user terminal 200 is turned downward to photograph or film a floor, and then the user terminal 200 is turned upward to photograph or film a ceiling. In a manner described above, the image information for all directions in the room is acquired, for example, as an omnidirectional image or a whole-sky sphere image. At this time, the photographing or filming in the direction toward the room wall by the user terminal 200 may be video filming or continuous shooting of still images. The image information or the video information captured by the user terminal 200 is transmitted to the information providing apparatus 100, and is acquired by the image information reception unit 132 via the communication unit 110. The acquired image information for the user's room is held in the layout DB 122.

The preference information acquisition unit 133 receives, via the communication unit 110, preference information indicating a user's preference for a room from the user terminal 200. The preference information acquisition unit 133 transmits, to the user terminal 200, a question about the aforementioned information on the design, taste, or color of the living room or furniture of the house, and the room atmosphere due to these factors in order to acquire these sets of information as the user's preference information, and receives an answer to the question to accept it as the preference information. The received preference information is held in the user DB 121. Note that the preference information acquisition unit 133 may automatically acquire the user's preference information from another web service or the like.

The layout information generation unit 134 conducts an analysis based on the image information for the user's room received by the image information reception unit 132 to generate layout information for the user's room. More specifically, the layout information generation unit 134 analyzes the image information or the video information captured by the user terminal 200, through processing such as object identification to identify walls, floors and ceilings in the user's room. The layout information generation unit 134 may also extract information on a structure such as furniture already arranged, a door or window, and the presence or absence of a storage space to generate, on the basis of this information, the layout information for the user's room. Further, the layout information generation unit 134 may analyze the captured image information or video information to extract information on the use (e.g., a studio apartment for living alone, a living room of a residence having multiple rooms, etc.) or taste (e.g., vintage, dark, etc.) of the user's room. Also, the layout information generation unit 134 analyzes the image information or the video information captured by the user terminal 200 to calculate dimensions of the interior of the room and those between one structure and another. The generated layout information is held in the layout DB 122.

Based on the attribute information received by the attribute information acquisition unit 131, the preference information received by the preference information acquisition unit 133, and the layout information generated by the layout information generation unit 134, the furniture arrangement unit 135 selects furniture information pertaining to furniture suitable for the user from the furniture information held in the furniture DB 123. Note that the furniture selected by the furniture arrangement unit 135 may be one or more pieces of furniture and may be presented and determined by the user's selection. At this time, a plurality pieces of furniture of a similar type may be presented, or a set of pieces of furniture may be presented. Further, the furniture arrangement unit 135 arranges three-dimensional (3D)-modeled image information for the furniture so as to be superimposed on the image information for the user's room that is received by the image information reception unit 132 to construct an augmented reality (AR) space or a mixed reality (MR) space. Note that the furniture arrangement unit 135 may arrange the image information for the furniture in the three-dimensional space according to a predetermined rule. This rule can be defined, for example, as: "Do not arrange furniture in front of a door"; or "Arrange furniture so as not to block a window (furniture with a height such that it does not block a window may be arranged)."

More specifically, the furniture arrangement unit 135 selects, from the furniture information held in the furniture DB 123, furniture information matching the atmosphere and dimensions of the room based on the room layout information, on the basis of the dimensions of the furniture, article information indicating the type of the furniture, shape information indicating its appearance, color information, or price information. At this time, the furniture arrangement unit 135 may arrange the selected furniture information so as not to overlap with furniture already arranged in the room image information, or may superimpose it so as to replace furniture already arranged in the room image information.

The furniture arrangement unit 135 determines furniture that is close to the user's preference, as an example rather than a limitation, based on the attribute information received by the attribute information acquisition unit 131 in view of purchase information (not shown) on purchasing history of the user or another user having the attribute from the vendor operating the information providing system 1, and selects the determined furniture as furniture information pertaining to furniture suitable for the user. For example, based on the attribute information, users may be classified into segments such as a woman in her twenties residing in prefecture X and a man in his forties residing in prefecture Y, and suitable furniture information may be selected from the furniture DB 123 based on the furniture information for the type, shape, and price range of the furniture that is close to the user's preference in view of purchasing behavior characteristics seen for each segment.

In addition, as an example rather than a limitation, the furniture arrangement unit 135 determines atmosphere information indicating an atmosphere of the room from the layout information received by the image information reception unit 132, and selects furniture fitting into the atmosphere information as the furniture information pertaining to the furniture suitable for the user. For example, based on the analysis results of the image information or the video information for the layout information, the atmosphere of the room may be classified into atmosphere information such as "Asian" and "European style", and furniture information of the atmosphere concerned may be selected from the furniture DB 123 as furniture information close to the user's preference.

In addition, as an example rather than a limitation, the furniture arrangement unit 135 determines the user's preference information from the preference information received by the preference information acquisition unit 133, and selects furniture fitting into the preference information as the furniture information pertaining to the furniture suitable for the user. For example, from the answer to the question by the preference information acquisition unit 133, the user's preference information may be classified into preference information such as "vintage", "dark", and "ivory", and furniture information concerned may be selected from the furniture DB 123 as the furniture information close to the user's preference.

The image information presentation unit 136 transmits the image information in which the furniture is arranged by the furniture arrangement unit 135 to construct the augmented reality (AR) space or the mixed reality (MR) space to the user terminal 200 via the communication unit 110, and presents the image information to the user. The presented image information is represented, for example, by an omnidirectional image or a whole-sky sphere image.

In addition, the image information presentation unit 136 transmits, together with the image information for the augmented reality (AR) space or the mixed reality (MR) space, furniture information on the arranged furniture, such as article information, shape information, color information, or price information for the furniture, to the user terminal 200 via the communication unit 110, and presents it to the user. This is because the user needs not only the appearance of furniture but also information such as a name, price, etc. when making a decision to purchase the furniture.

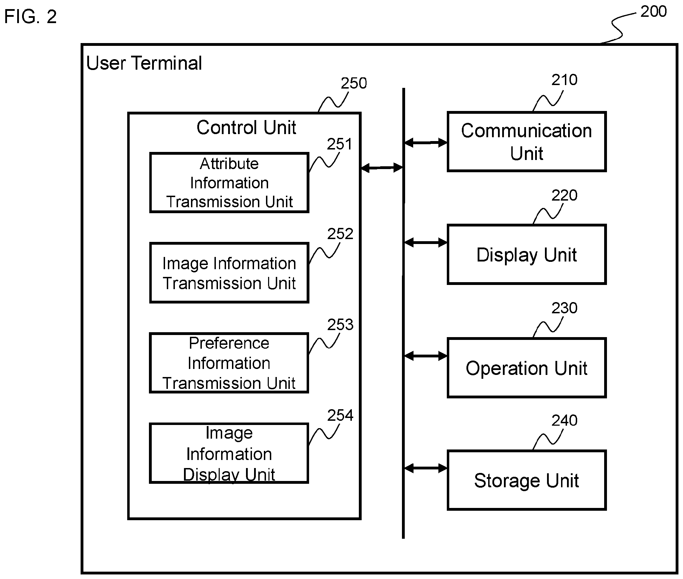

FIG. 2 is a functional configuration block diagram showing a user terminal 200 shown in FIG. 1. The user terminal 200 includes a communication unit 210, a display unit 220, an operation unit 230, a storage unit 240, and a control unit 250.

The communication unit 210 is a communication interface for wired or wireless communication with the information providing apparatus 100 via the network NW, and may apply any communication protocol as long as they can mutually communicate. The communication protocol for the communication unit 210 to perform communication is, but is not limited to, for example TCP/IP.

The display unit 220 is a user interface for use in displaying an operation input by the user or data transmitted from the information providing apparatus 100, and includes a liquid crystal display or the like. The display unit 220 displays the attribute information or the preference information that is input by the user, or the image information for the augmented reality (AR) space or the mixed reality (MR) space that is transmitted from the information providing apparatus 100 to be presented.

The operation unit 230 is a user interface for a user to input operator guidance, and includes a keyboard, a mouse, a touch panel, or the like. With the operation unit 230, the user attribute information or the preference information is input.

The storage unit 240 stores a program, input data, or the like for executing various control processes or each function of the control unit 250, and includes, but is not limited to, for example a memory such as RAM and ROM, or a storage such as HDD, SSD, and flash memory. In addition, the storage unit 240 temporarily stores data communicated with the information providing apparatus 100.

By executing a program stored in the storage unit 240, the control unit 250 controls the overall operation of the user terminal 200, and includes, but is not limited to, an apparatus such as a CPU, an MPU, a GPU, a microprocessor, a processor core, a multiprocessor, an ASIC, an FPGA, and the like. As functions of the control unit 250, the control unit 250 includes an attribute information transmission unit 251, an image information transmission unit 252, a preference information transmission unit 253, and an image information display unit 254. The attribute information transmission unit 251, the image information transmission unit 252, the preference information transmission unit 253, and the image information display unit 254 are activated by a program stored in the storage unit 240 and executed by the user terminal 200.

The attribute information transmission unit 251 receives an input of the user attribute information from the operation unit 230 and transmits the input to the information providing apparatus 100 via the communication unit 210. The transmitted attribute information is received by the attribute information acquisition unit 131 of the information providing apparatus 100.

The image information transmission unit 252 transmits image information that is captured by photographing or filming a user's room with a camera function through a user's operation to the information providing apparatus 100 via the communication unit 210. The transmitted layout information is received by the image information reception unit 132 of the information providing apparatus 100.

The preference information transmission unit 253 receives an input of the user's preference information from the operation unit 230 and transmits the input to the information providing apparatus 100 via the communication unit 210. The transmitted attribute information is received by the preference information acquisition unit 133 of the information providing apparatus 100.

The image information display unit 254 receives, via the communication unit 210, the image information in which the furniture is arranged to construct the augmented reality (AR) space or the mixed reality (MR) space, which is transmitted from the image information presentation unit 136 of the information providing apparatus 100. The received image information is displayed on the display unit 220.

### <Process flow>

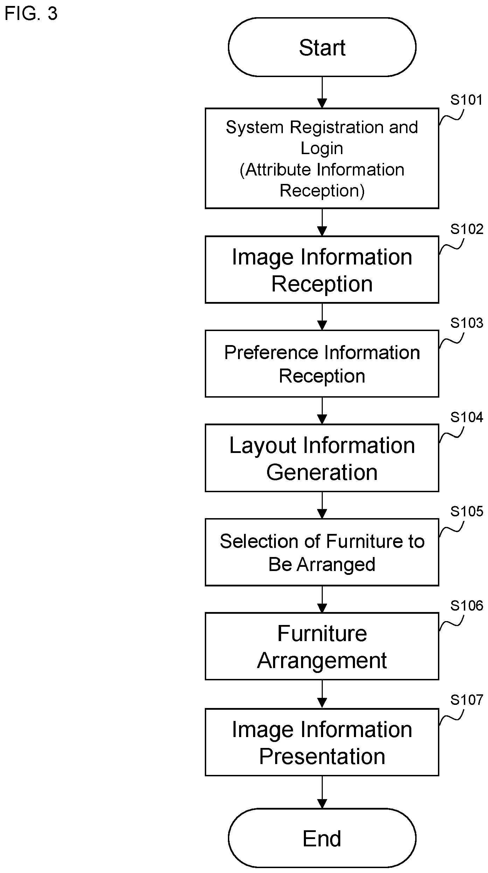

With reference to FIG. 3, an example flow of an information providing process executed by the information providing system 1 will be described. FIG. 3 is a flowchart showing an operation of the information providing system 1 shown in FIG. 1.

As processing of step S101, the information providing apparatus 100 performs user authentication in order to receive a service provided by the information providing system 1. For this reason, for example, information on the age, sex, and place of residence of the user is input with the user terminal 200 through a user's operation to perform user registration. At this time, the user attribute information is input into the attribute information transmission unit 251 of the user terminal 200, is received by the attribute information acquisition unit 131 of the information providing apparatus 100 via the communication unit 110, and is then held in the user DB 121. In addition, in order to log into the information providing system 1, a request is made to input account information and a password, and the user authentication is performed by checking whether the input information matches the registered information. If there is a match, logging into the information providing apparatus 100 is allowed.

As processing of step S102, the image information transmission unit 252 of the user terminal 200 transmits the image information that is captured by photographing or filming a user's room with a camera function through a user's operation to the information providing apparatus 100. The image information reception unit 132 of the information providing apparatus 100 receives the image information for the user's room via the communication unit 110.

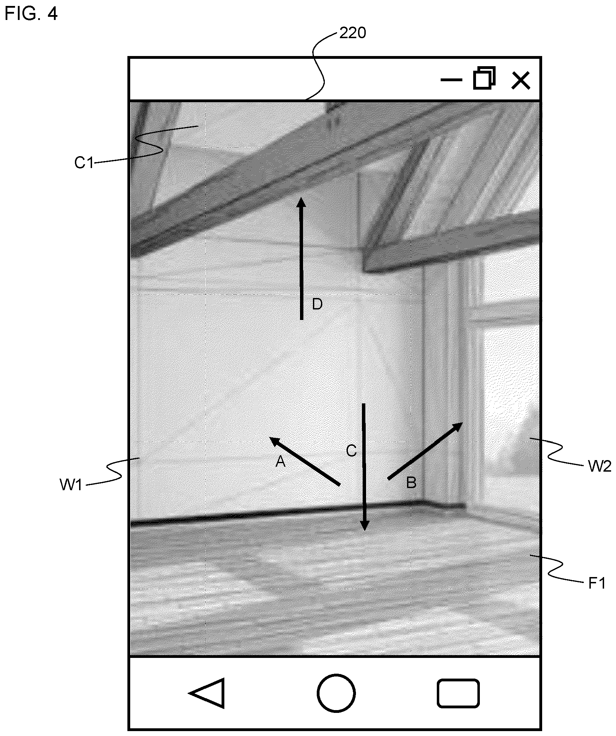

FIG. 4 is a schematic diagram showing an example image information for a room to be displayed on the display unit 220 shown in FIG. 2. When the image information transmission unit 252 is activated by operating the user terminal 200, the camera function of the user terminal 200 is activated and enters a state for photographing or filming, and the user's room is photographed or filmed by a CCD camera or the like provided for the user terminal 200, and displayed on the display unit 220 as shown in FIG. 4.

As shown in FIG. 4, for example, the image information captured by photographing or filming the user's room is displayed on the display unit 220. The user's room has, for example, a wall W1, a wall W2 vertically in contact with the wall W1, a floor F1 horizontally in contact with the lower part of the walls W1 and W2, and a ceiling C1 horizontally in contact with the upper part of the walls W1 and W2; an image captured by photographing or filming part of this room is displayed on the display unit 220. Note that the walls W1 and W2 do not necessarily have to be walls surrounding the four corners of the room and may be partially open, and that the room doesn't have to be square. Further, as shown in FIG. 4, the room may have a structure such as a window.

The room is photographed or filmed, for example, by operating the user terminal 200 in accordance with an instruction from the image information reception unit 132 to photograph or film the wall W1 toward one of the walls of the room, for example, in the direction of the arrow A shown in FIG. 4. Next, in accordance with an instruction from the image information reception unit 132, the user terminal 200 is turned to rotate by 90° in the horizontal direction and moved to the right direction, and the wall W2 is photographed or filmed, for example, in the direction of the arrow B shown in FIG. 4. In this way, the photographing or filming is maintained almost in an entire circle in the room to photograph or film the walls of the room in the four directions.

Next, in accordance with an instruction from the image information reception unit 132, the user terminal 200 is turned to move in the direction of the arrow C shown in FIG. 4 to photograph or film the floor F1 of the room. Further, in accordance with an instruction from the image information reception unit 132, the user terminal 200 is turned to move in the direction of the arrow D shown in FIG. 4 to photograph or film the ceiling C1 of the room. In a manner described above, the image information for all directions in the user's room is acquired as an omnidirectional image or a whole-sky sphere image. The layout information is transmitted to the information providing apparatus 100.

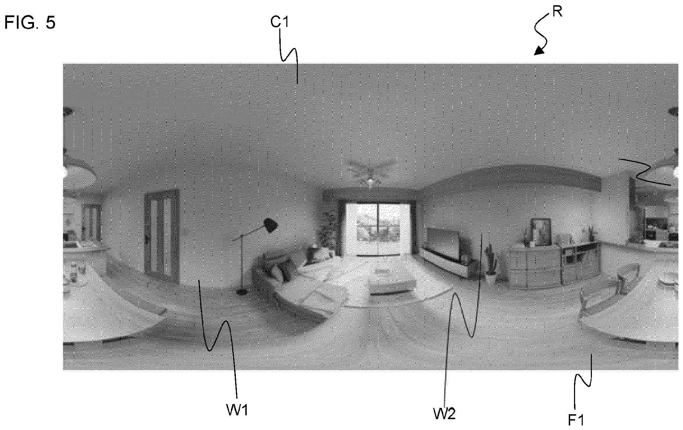

FIG. 5 is a schematic diagram showing example image information R received by the image information reception unit 132 shown in FIG. 1. In step S102, the image information or the video information captured by the user terminal 200 is generated, for example, as an omnidirectional image such as the image information R configured by the walls W1 and W2, the floor F1, and the ceiling C1 shown in FIG. 5. This image information R is a continuous representation of images of the user's room in four directions, and thus you can see the image information for the user's room in any direction. In other words, although not shown in FIG. 5, the right and left ends are in continuous contact with each other, and the same is true for the vertical direction.

As processing of step S103, the preference information acquisition unit 133 of the information providing apparatus 100 transmits a question about the user's preference information and the question is displayed on the display unit 220 of the user terminal 200. The preference information transmission unit 253 transmits the user's preference information that is input through a user's operation to the information providing apparatus 100. The preference information acquisition unit 133 of the information providing apparatus 100 receives the user's preference information via the communication unit 110.

FIG. 5 is a schematic diagram showing an example of inputting preference information to be displayed on the display unit 220 shown in FIG. 2. When a question about the user's preference information is transmitted from the information providing apparatus 100, the content of the question and answer choices thereto are displayed on the display unit 220 of the user terminal 200, as shown in FIG. 5.

As shown in FIG. 5, for example, a question text T1 to select a taste for a living room or furniture of a house, which is a piece of the user's preference information, is displayed, and selection buttons B1, B2, and B3 are displayed on the display unit 220. The selection buttons B1, B2, and B3 are buttons respectively for answering "Ivory", "White", and "Natural" for the taste for the living room or furniture of the house. When the user selects (taps on the display unit 220) any one of the selection buttons B1, B2, and B3 in response to the question, the preference information transmission unit 253 receives and transmits the answer to the information providing apparatus 100.

As processing of step S104, the layout information generation unit 134 of the information providing apparatus 100 conducts an analysis based on the image information for the user's room received in step S102 to generate layout information for the user's room. From the image information for the user's room, walls, floors, or ceilings in the user's room are identified to calculate dimensions of the interior of the room and those between one structure and another. At this time, information on a structure such as a door or window, and the presence or absence of a storage space may also be extracted.

As processing of step S105, the furniture arrangement unit 135 selects furniture information pertaining to furniture suitable for the user from the furniture information held in the furniture DB 123, based on the attribute information received in step S101, the preference information received in step S103, and the layout information generated in step S104.

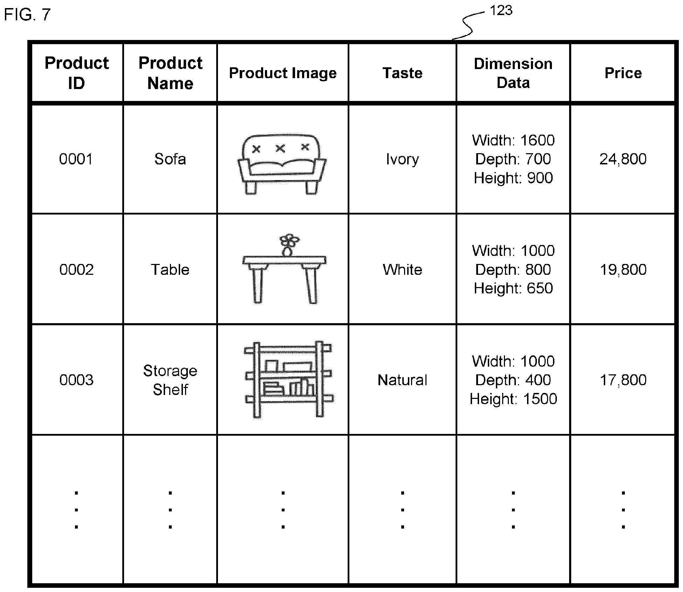

FIG. 7 is a schematic diagram showing example data held in the furniture DB 123 shown in FIG. 1. The furniture DB 123 contains information on a product name, a product image, a taste, dimension data, and a price, each of which corresponds to a column name in the furniture DB 123 shown in FIG. 7, in association with a product ID shown in FIG. 7.

The product ID is identification information for identifying the furniture information. The product name is an article name indicating a type of the furniture; for example, information such as "sofa", "table", and "storage shelf" is held. The product image is three-dimensional (3D)-modeled image information for furniture for arranging the furniture in the three-dimensional space. The taste is information indicating the taste of the furniture; for example, information such as "Ivory", "White", and "Natural" is held. For the dimension data, the actual dimensions of the furniture is held as information on, for example, the width, depth, and height. The price is the price information for the furniture. In step S105, furniture information pertaining to furniture suitable for the user is selected based on these pieces of information.

As processing of step S106, the furniture arrangement unit 135 arranges the three-dimensional-modeled image information for the furniture selected in step S105 to be superimposed on the image information captured by photographing or filming the user's room, which is received in step S102, to construct an augmented reality (AR) space or a mixed reality (MR) space.

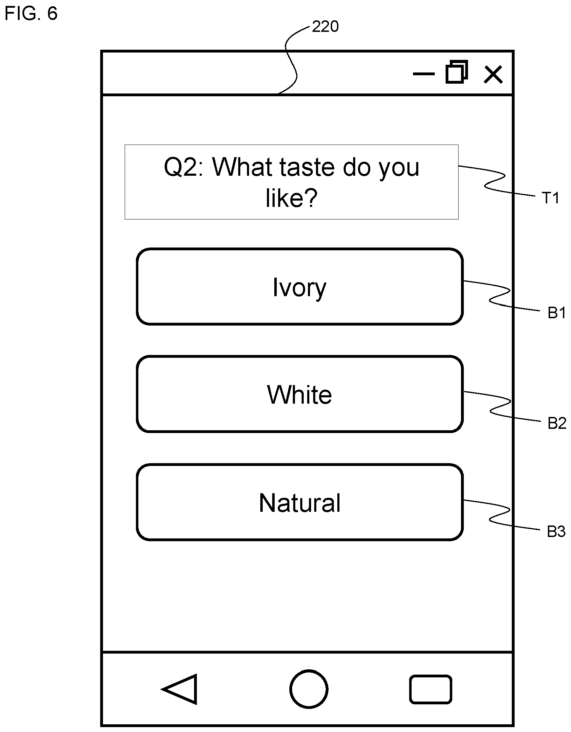

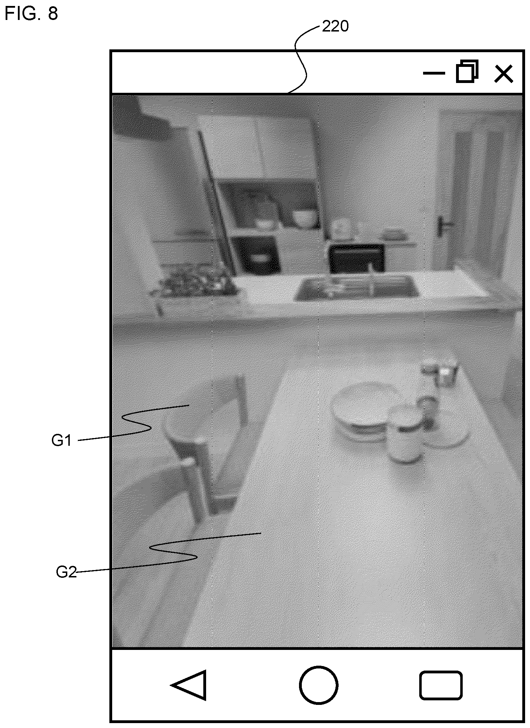

FIG. 8 is a schematic diagram showing an example display of image information displayed on the display unit 220 shown in FIG. 2. In step S106, the three-dimensional (3D)-modeled image information for the furniture, as in the product image shown in FIG. 7, that is selected in step S105 is arranged on the augmented reality (AR) space or the mixed reality (MR) space from the photographed or filmed user's room shown in FIG. 6. In the example shown in FIG. 8, a chair G1 and a table G2 are arranged as example furniture. The chair G1 and the table G2 may be displayed so as to be superimposed on the position where other furniture is arranged in the image information, or they may be displayed so as to be superimposed with no other furniture arranged in the image information. In step S107 described below, the resultant image information is transmitted to the user terminal 200 and displayed on the display unit 220.

As processing of step S107, the image information presentation unit 136 transmits the image information in which the furniture is arranged to construct the augmented reality (AR) space or the mixed reality (MR) space in step S106, to the user terminal 200 via the communication unit 110. The image information display unit 254 of the user terminal 200 displays the received image information on the display unit 220 as shown in FIG. 8. At this time, since the image information presentation unit 136 also transmits the furniture information for the arranged furniture, the image information display unit 254 also displays the furniture information received.

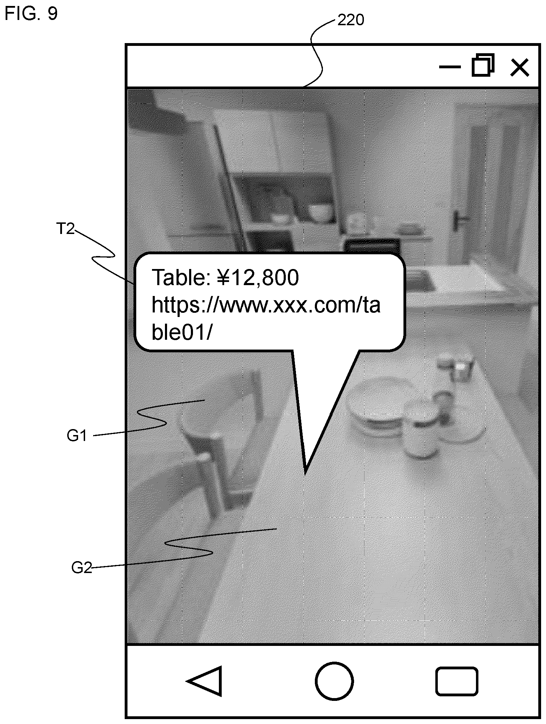

FIG. 9 is a schematic diagram showing an example presentation of furniture information displayed on the display unit 220 shown in FIG. 2. As shown in FIG. 9, the furniture information received in step S107 is displayed on the display of the augmented reality (AR) space or the mixed reality (MR) space simulating the user's room shown in FIG. 8 as furniture information T2 as shown in FIG. 9. For the furniture information T2, for example, a product name (an article name of the furniture), a price, and information on a link to a web page for referring to the furniture are displayed. The user can decide whether to purchase the furniture by referring to this furniture information as well.

### <Advantageous Effect>

As described above, in the information providing apparatus, the information providing system, and the information providing method according to the present embodiment, the image information reception unit receives the image information captured by photographing or filming the user's room, the layout information generation unit generates the layout information, the furniture arrangement unit selects the furniture information suitable for the user, and the image information in which the selected furniture is arranged to construct the augmented reality (AR) space or the mixed reality (MR) space is presented to the user. Accordingly, it is possible to present the state in which furniture pertaining to the furniture information is arranged in the layout information of an actual residence received from the user. It is thus possible for the user to visually grasp an image of candidate furniture for purchase arranged in his/her actual residence or room through the three-dimensional space.

In addition, an attribute information reception unit receives the user attribute information, a preference information reception unit receives the preference information indicating a user's preference for a room, and the furniture arrangement unit selects the furniture information suitable for the user based on the user attribute information and the preference information. This makes it possible to present furniture that is close to the user's preference.

### (Embodiment 2)

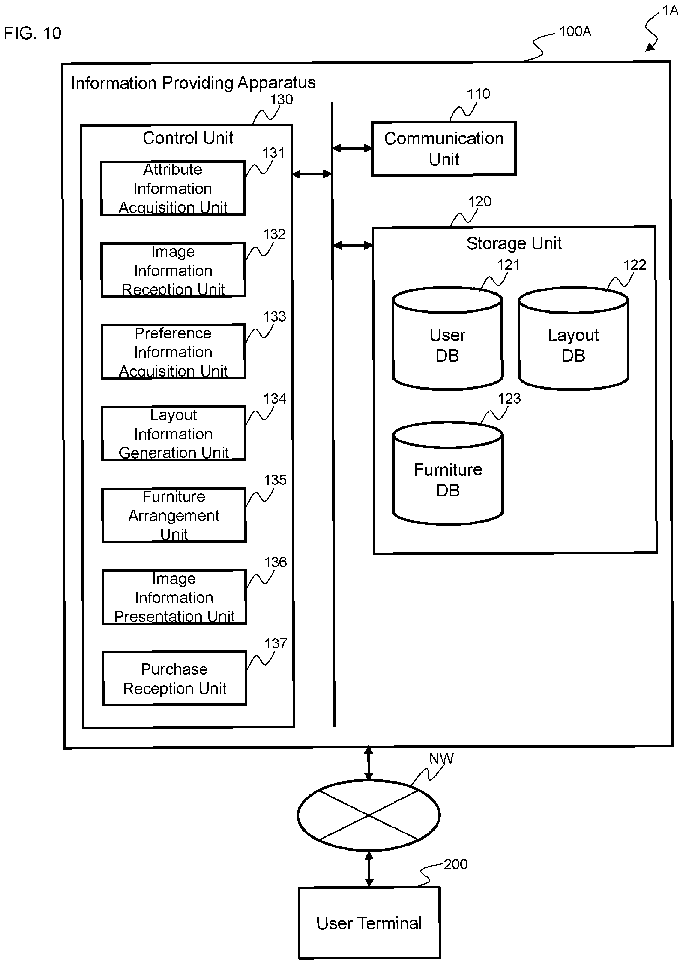

FIG. 10 is a functional configuration block diagram showing an information providing system 1A according to Embodiment 2 of the present disclosure. The information providing system 1A is similar to the information providing system 1 according to Embodiment 1 in that it is a system operated by a vendor who sells furniture which provides information on furniture that is merchandise and which presents furniture for sale that is arranged in an image information captured by photographing or filming a room of a user who is a customer of the vendor; however, the information providing system 1A differs from the information providing system 1 according to Embodiment 1 in that the information providing system 1A includes a purchase reception unit 137 as a function of the control unit 130. The rest of the configuration and process flow are the same as in Embodiment 1.

Embodiment 2 includes means for actually purchasing the furniture presented in Embodiment 1.

The purchase reception unit 137 receives, from the user terminal 200, an input reporting that the user will actually purchase the furniture which is arranged in the image information by the furniture arrangement unit 135 and is presented by the image information presentation unit 136.

For example, when the furniture information T2 shown in FIG. 9 is selected (tapped on the display unit 220), the purchase reception unit 137 is activated and the display unit 220 displays a screen for proceeding with the purchase (not shown). The user inputs the manner of payment, etc. by operating the user terminal 200 to express the intention to make the payment, whereby the furniture is actually sold.

According to Embodiment 2, in addition to the advantageous effect due to Embodiment 1 above, the purchase reception unit allows the user to proceed with purchase of the furniture. This facilitates the procedure for purchasing the furniture, and thus can prevent a furniture dealer from losing an opportunity to acquire customers owing to a troublesome purchasing procedure.

### (Embodiment 3)

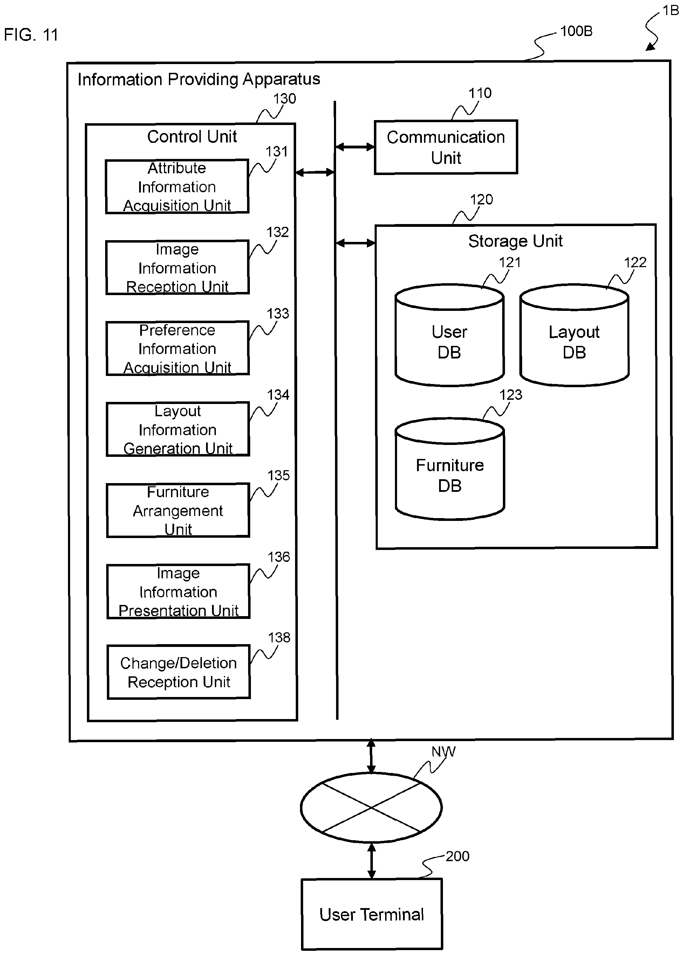

FIG. 11 is a functional configuration block diagram showing an information providing system 1B according to Embodiment 3 of the present disclosure. The information providing system 1B is similar to the information providing system 1 according to Embodiment 1 in that it is a system operated by a vendor who sells furniture which provides information on furniture that is merchandise and which presents furniture for sale that is arranged in an image information captured by photographing or filming a room of a user who is a customer of the vendor; however, the information providing system 1B differs from the information providing system 1 according to Embodiment 1 in that the information providing system 1B includes a change/deletion reception unit 138 as a function of the control unit 130. The rest of the configuration and process flow are the same as in Embodiment 1.

Embodiment 3 includes a function for moving the position of, changing, or deleting the furniture presented in Embodiment 1.

The change/deletion reception unit 138 receives, from the user terminal 200, an input reporting that the furniture which is arranged in the image information by the furniture arrangement unit 135 and is presented by the image information presentation unit 136 will be moved to another position in this three-dimensional space, changed to other furniture, or deleted.

For example, when a predetermined operation (e.g., selecting furniture of interest and swiping it to another position) is performed on the display unit 220 in order to move the chair G1 or the table G2 shown in FIG. 9 to another position in the three-dimensional space, the chair G1 or the table G2 is displayed at the other position after the movement. Also, for example, when a predetermined operation (e.g., selecting the furniture of interest and swiping it off the screen) is performed on the display unit 220 in order to change the chair G1 or the table G2 shown in FIG. 9 to another piece of furniture or delete it, the other piece of furniture is selected again from the furniture DB 123 or the furniture is deleted from the three-dimensional space displayed on the display unit 220.

According to Embodiment 3, in addition to the advantageous effect due to Embodiment 1 above, the change/deletion reception unit changes or deletes the presented furniture. This allows the furniture selected by the furniture arrangement unit, when it does not meet the preference, to be changed or deleted, which enables presentation of furniture that is closer to the user's preference.

### (Embodiment 4 (program))

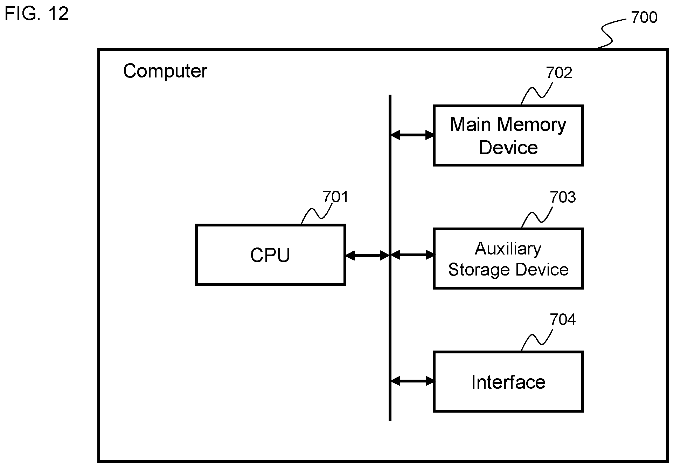

FIG. 12 is a functional configuration block diagram showing an example configuration of a computer (electronic computer) 700. The computer 700 includes a CPU 701, a main memory device 702, an auxiliary storage device 703, and an interface 704.

Here, described below are details of a control program (information providing program) for fulfilling each of the functions constituting the attribute information acquisition unit 131, the image information reception unit 132, the preference information acquisition unit 133, the layout information generation unit 134, the furniture arrangement unit 135, the image information presentation unit 136, the purchase reception unit 137, and the change/deletion reception unit 138 according to Embodiments 1 to 3. These function blocks are implemented in the computer 700. An operation of each of these components is stored in the auxiliary storage device 703 in the form of a program. The CPU 701 reads a program from the auxiliary storage device 703, expands it to the main memory device 702, and executes the aforementioned process according to the program. In addition, the CPU 701 secures a storage area corresponding to the above-described storage unit in the main memory device 702 according to the program.

The program is more specifically a control program for causing the computer 700 to fulfill: a user information acquisition step of acquiring information on a user; an image information reception step of receiving an input of image information captured by photographing or filming a room through a user's operation; a layout information generation step of conducting an analysis based on the image information to generate layout information for the room; a furniture arrangement step of selecting, from furniture information stored in advance, furniture information suitable for the user based on the user information and the layout information and arranging furniture pertaining to the selected furniture information so as to be superimposed on the image information; and an image information presentation step of presenting the image information in which the furniture is arranged to the user.

Note that the auxiliary storage device 703 is an example of a non-transitory tangible medium. Other examples of the non-transitory tangible medium include a magnetic disk, an optical magnetic disk, a CD-ROM, a DVD-ROM, and a semiconductor memory that are connected via the interface 704. When the program is delivered to the computer 700 via a network, the computer 700 upon receipt of the delivery may expand the program to the main memory device 702 to execute the aforementioned process.

In addition, the program may be a program for fulfilling a part of the aforementioned functions. Further, the program may be a so-called difference file (difference program), which is a program that fulfills the aforementioned functions in combination with another program already stored in the auxiliary storage device 703.

While embodiments according to the disclosure have been described above, these embodiments can be implemented in various other forms, with various omissions, substitutions, and changes. These embodiments and modifications, and those with omissions, substitutions, and changes are included in the technical scope of the claims and the equivalent scope thereof.

### REFERENCE SIGNS LIST

1, 1A, 1B: an information providing system, 100, 100A, 100B: an information providing apparatus, 110: a communication unit, 120: a storage unit, 121: a user DB, 122: a layout DB, 123: a furniture DB, 130: a control unit, 131: an attribute information reception unit (a user information acquisition unit), 132: an image information reception unit, 133: a preference information reception unit (a user information acquisition unit), 134: a layout information generation unit, 135: a furniture arrangement unit, 136: an image information presentation unit, 137: a purchase reception unit, 138: a change/deletion reception unit, 200: a user terminal, 210: a communication unit, 220: a display unit, 230: an operation unit, 240: a storage unit, 250: a control unit, 251: an attribute information transmission unit, 252: an image information transmission unit, 253: a preference information transmission unit, 254: an image information display unit, NW: a network

## Claims

1. An information providing apparatus comprising:
a user information acquisition unit that acquires information on a user;
an image information reception unit that receives an input of image information or video information captured by photographing or filming a room;
a layout information generation unit that conducts an analysis based on the image information or the video information to generate layout information for the room;
a furniture arrangement unit that selects, from furniture information stored in advance, furniture information suitable for the user based on the user information and the layout information, and arranges furniture pertaining to the selected furniture information so as to be superimposed on the image information or the video information; and
an image information presentation unit that presents the image information or the video information in which the furniture is arranged to the user.

2. The information providing apparatus according to claim 1, wherein the layout information generation unit determines a dimension of the room based on the image information or the video information received, and
the furniture arrangement unit arranges the furniture pertaining to the selected furniture information so as to be superimposed on the image information or the video information based on the dimension.

3. The information providing apparatus according to claim 1 or 2, wherein the furniture arrangement unit arranges the furniture pertaining to the furniture information that is selected from 3D-modeled furniture information stored in advance, so as to be superimposed on the image information or the video information, and
the image information presentation unit presents the user with the image information or the video information in which the 3D-modeled furniture information is arranged.

4. The information providing apparatus according to any one of claims 1 to 3, wherein the image information presentation unit presents the user with the furniture information in the image information or the video information in which the furniture is arranged.

5. The information providing apparatus according to any one of claims 1 to 4, wherein the information providing apparatus comprises a change/deletion reception unit that moves the arranged furniture to another position in the three-dimensional space, changes the arranged furniture to other furniture, or deletes the arranged furniture, in the image information or the video information in which the furniture is arranged.

6. The information providing apparatus according to any one of claims 1 to 5, wherein the user information acquisition unit acquires attribute information for the user, and preference information indicating a preference of the user for a room.

7. The information providing apparatus according to claim 6, wherein the furniture arrangement unit selects furniture information suitable for the user from purchase information on a furniture purchasing history of another user having attribute information similar to the attribute information.

8. The information providing apparatus according to claim 6 or 7, wherein the furniture arrangement unit determines preference information of the user based on an answer to one or more questions to the user and selects furniture information suitable for the user from the determined preference information.

9. The information providing apparatus according to any one of claims 1 to 8, wherein the information providing apparatus comprises a purchase reception unit that receives, from the user, an input of purchasing of the furniture in image information or the video information in which the furniture is arranged.

10. The information providing apparatus according to any one of claims 1 to 9, wherein the furniture arrangement unit determines atmosphere information indicating an atmosphere of the room based on the layout information and selects furniture information suitable for the user from the determined atmosphere information.

11. The information providing apparatus according to any one of claims 1 to 10, wherein the furniture arrangement unit selects furniture information suitable for the user based on any one or more of article information, shape information, color information, or price information for furniture that are stored as the furniture information.

12. The information providing apparatus according to any one of claims 1 to 11, wherein the layout information reception unit receives the layout information based on the image information or the video information that is captured by photographing or filming a floor of the room, a wall of the room, and a ceiling of the room.

13. The information providing apparatus according to any one of claims 1 to 12, wherein the furniture arrangement unit arranges the furniture pertaining to the furniture information so as not to overlap with furniture already arranged in the room or superimpose the furniture pertaining to the furniture information so as to replace furniture already arranged in the room.

14. The information providing apparatus according to any one of claims 1 to 13, wherein the image information presentation unit presents the user with the image information or the video information in which the furniture is arranged as an augmented reality space or a mixed reality space.

15. An information providing system comprising an information providing apparatus and a user terminal,
the information providing apparatus including:
a user information acquisition unit that acquires information on a user;
an image information reception unit that receives an input of image information or video information captured by photographing or filming a room;
a layout information generation unit that conducts an analysis based on the image information or the video information to generate layout information for the room;
a furniture arrangement unit that selects, from furniture information stored in advance, furniture information suitable for the user based on the user information and the layout information, and arranges furniture pertaining to the selected furniture information so as to be superimposed on the image information or the video information; and
an image information presentation unit that transmits the image information or the video information in which the furniture is arranged to the user, and
the user terminal including:
an image information transmission unit that transmits the image information or the video information captured by the user photographing or filming the room to the information providing apparatus; and
an image information display unit that displays, for the user, the image information or the video information in which the furniture is arranged and which is received from the information providing apparatus.

16. An information providing method comprising:
a user information acquisition step of a user information acquisition unit acquiring information on a user;
an image information reception step of an image information reception unit receiving an input of image information or video information captured by photographing or filming a room;
a layout information generation step of a layout information generation unit conducting an analysis based on the image information or the video information to generate layout information for the room;
a furniture arrangement step of a furniture arrangement unit selecting, from furniture information stored in advance, furniture information suitable for the user based on the user information and the layout information, and arranging furniture pertaining to the selected furniture information so as to be superimposed on the image information or the video information; and
an image information presentation step of an image information presentation unit presenting the image information or the video information in which the furniture is arranged to the user.

17. An information providing program for causing an electronic computer to execute:
a user information acquisition step of acquiring information on a user;
an image information reception step of receiving an input of image information or video information captured by photographing or filming a room;
a layout information generation step of conducting an analysis based on the image information or the video information to generate layout information for the room;
a furniture arrangement step of selecting, from furniture information stored in advance, furniture information suitable for the user based on the user information and the layout information, and arranging furniture pertaining to the selected furniture information so as to be superimposed on the image information or the video information; and
an image information presentation step of presenting the image information or the video information in which the furniture is arranged to the user.
